# EUROPEAN PATENT APPLICATION

(11) **EP 4 604 142 A1**
(43) Date of publication of application: **20.08.2025**
(21) Application number: 25155975.3
(22) Date of filing: 05.02.2025
(51) Int. Cl.: H01C 7/12, H01C 1/144, H01C 1/022, H02H 9/04

(54) **SURGE PROTECTIVE DEVICE MODULES AND POWER SUPPLY SYSTEMS INCLUDING SAME**

(30) Priority: 14.02.2024 DE 202024100709 U
(71) Applicant: RAYCAP IP DEVELOPMENT LTD, Nicosia (CY)
(72) Inventor: KAMEN EK, Sebastjan, 4220 kofja Loka (SI); MESARIC, Andrej, 4211 Mavcice (SI)
(74) Representative: HL Kempner PartG mbB

(57) **Abstract**

A surge protective device (SPD) module for use with an electrical power supply transmission system includes a module housing, an SPD circuit in the module housing, and module terminals on the module housing. The SPD circuit includes an overvoltage protection component. The module terminals are configured to electrically connect cables from the electrical power supply transmission system to the SPD circuit. The module terminals are push-on connectors. The module terminals are configured in pairs of first and second module terminals, wherein the first and second module terminals of each pair form an electrical V-connection with one another.

## Description

### Field

The present invention relates to surge protective devices (SPDs) for electrical power transmission lines.

### Background

Frequently, excessive voltage or current is applied across service lines that deliver power to residences and commercial and institutional facilities. Such excess voltage or current spikes (transient overvoltages and surge currents) may result from lightning strikes, for example. The above events may be of particular concern in telecommunications distribution centers, hospitals and other facilities where equipment damage caused by overvoltages and/or current surges is not acceptable and resulting down time may be very costly.

Typically, sensitive electronic equipment may be protected against transient overvoltages and surge currents using surge protective devices (SPDs). For example, an overvoltage protection device may be installed at a power input of equipment to be protected, which is typically protected against overcurrents when it fails. Typical failure mode of an SPD is a short circuit. The overcurrent protection typically employed is a combination of an internal thermal disconnector to protect the device from overheating due to increased leakage currents and an external fuse to protect the device from higher fault currents. Different SPD technologies may avoid the use of the internal thermal disconnector because, in the event of failure, they change their operation mode to a low ohmic resistance.

In the event of a surge current in a line L (*e.g.*, a voltage line of a three phase electrical power circuit), protection of power system load devices may necessitate providing a current path to ground for the excess current of the surge current. The surge current may generate a transient overvoltage between the line L and the neutral line N (the neutral line N may be conductively coupled to an earth ground PE). Since the transient overvoltage significantly exceeds the operating voltage of the SPD, the SPD will become conductive, allowing the excess current to flow from line L through SPD to the neutral N. Once the surge current has been conducted to neutral N, the overvoltage condition ends and the SPD may become non-conducting again. However, in some cases, one or more SPDs may begin to allow a leakage current to be conducted even at voltages that are lower that the operating voltage of the SPDs. Such conditions may occur in the case of an SPD deteriorating.

### Summary

According to some embodiments, a surge protective device (SPD) module for use with an electrical power supply transmission system includes a module housing, an SPD circuit in the module housing, and module terminals on the module housing. The SPD circuit includes an overvoltage protection component. The module terminals are configured to electrically connect cables from the electrical power supply transmission system to the SPD circuit. The module terminals are push-on connectors. The module terminals are configured in pairs of first and second module terminals, wherein the first and second module terminals of each pair form an electrical V-connection with one another.

According to some embodiments, the SPD module includes an electrically insulating terminal cover removably mounted on the module housing and covering the second module terminals.

In some embodiments, the module terminals are fast-on connectors.

In some embodiments, the overvoltage protection component includes a varistor.

According to some embodiments, the SPD module includes a thermal disconnect mechanism configured to disconnect the varistor in response to overheating of the varistor.

In some embodiments, the SPD module includes an indicator system configured to provide an alert in response to actuation of the thermal disconnect mechanism.

In some embodiments, the indicator system includes a remote indicator system including a switch, and a remote monitoring connector forming a part of the SPD module.

According to some embodiments, the SPD module includes: a first varistor connected to a first pair of the module terminals; a second varistor connected to second pair of the module terminals; a neutral busbar connected to a third pair of the module terminals; a first thermal disconnect mechanism configured to disconnect the first varistor in response to overheating of the first varistor; and a second thermal disconnect mechanism configured to disconnect the second varistor in response to overheating of the second varistor. The first thermal disconnect mechanism includes a first disconnect leg forming a part of the neutral busbar. The second thermal disconnect mechanism includes a second disconnect leg forming a part of the neutral busbar.

In some embodiments, the SPD module includes an indicator system configured to provide an alert in response to actuation of either of the first and second thermal disconnect mechanisms.

In some embodiments, the base module is configured to be mounted on a support rail.

In some embodiments, the SPD module includes: a support rail channel configured to receive the support rail; and a support rail latching mechanism configured secure the SPD module to the support rail.

According to some embodiments, the base module is also configured to be alternatively mounted directly on a wall.

### Brief Description of the Drawings

The accompanying drawings, which form a part of the specification, illustrate embodiments of the present invention.
**FIG. 1** is a front perspective view of an SPD module according to some embodiments mounted on a support rail.
**FIG. 2** is an exploded, front perspective view of the SPD module of **FIG. 1****.**
**FIG. 3** is a front view of the SPD module of **FIG. 1****.**
**FIG. 4** is a fragmentary front perspective view of the SPD module of **FIG. 1****.**
**FIG. 5** is a fragmentary front perspective view of the SPD module of **FIG. 1****.**
**FIG. 6** is an exploded, fragmentary front perspective view of the SPD module of **FIG. 1****.**
**FIG. 7** is a perspective view of a varistor subassembly forming a part of the SPD module of **FIG. 1****.**
**FIG. 8** is a perspective view of the varistor subassembly of **FIG. 7****.**
**FIG. 9** is a perspective view of a push-on connector and cable for use with the SPD module of **FIG. 1****.**
**FIG. 10** is a cross-sectional view of the SPD module of **FIG. 1** taken along the line **10-10** of **FIG. 1** wherein push-on connectors as illustrated in **FIG. 9** are installed on the SPD module.
**FIG. 11** is a schematic electrical diagram of an installation including the SPD module of **FIG. 1** installed with push-on connectors as illustrated in **FIG. 10****.**
**FIG. 12** is perspective view of a push-on T-connector and cable for use with the SPD module of **FIG. 1****.**
**FIG. 13** is a cross-sectional view of the SPD module of **FIG. 1** taken along the line **10-10** of **FIG. 1** wherein push-on T-connectors as illustrated in **FIG. 12** are installed on the SPD module.
**FIG. 14** is a schematic electrical diagram of an installation including the SPD module of **FIG. 1** installed with push-on T-connectors as illustrated in **FIG. 12****.**
**FIG. 15** is a perspective view of the SPD module of **FIG. 1** mounted on a wall.
**FIG. 16** is a perspective view of an SPD module according to further embodiments.

### Detailed Description of Embodiments

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It is noted that aspects described with respect to one embodiment may be incorporated in different embodiments although not specifically described relative thereto. That is, all embodiments and/or features of any embodiments can be implemented separately or combined in any way and/or combination. Moreover, other apparatus, methods, and systems according to embodiments of the inventive concept will be or become apparent to one with skill in the art upon review of the following drawings and detailed description. It is intended that all such additional apparatus, methods, and/or systems be included within this description, be within the scope of the present inventive subject matter, and be protected by the accompanying claims.

As used herein, "monolithic" means an object that is a single, unitary piece formed or composed of a material without joints or seams. Alternatively, a unitary object can be a composition composed of multiple parts or components secured together at joints or seams.

Embodiments of the inventive concept are described herein with respect to surge protection for electrical power transmission cables. An "electrical power transmission cable" as used herein means any kind of medium configured to carry electrical power from a power supply to a device or equipment that consumes the electrical power.

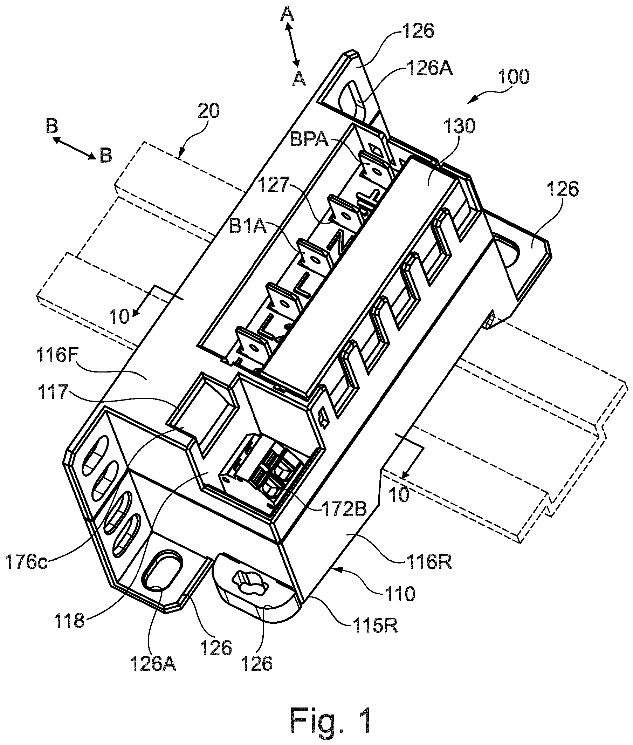

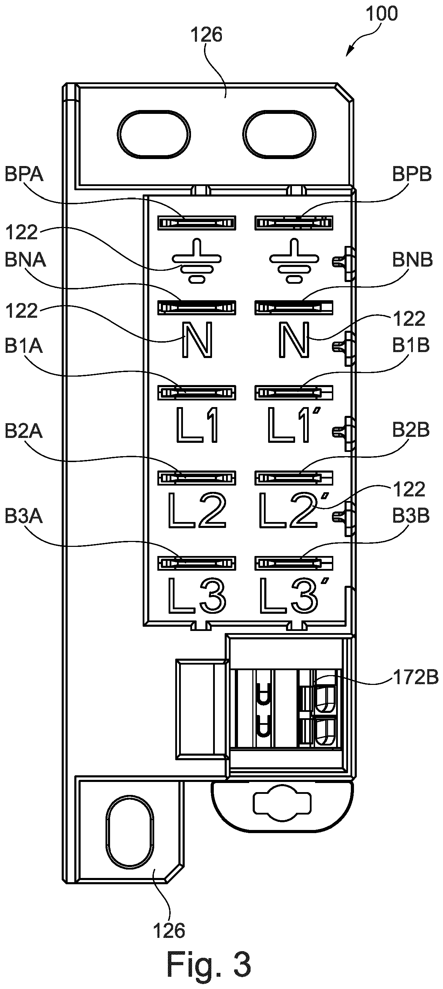

Referring to **FIGS. 1-15****,** a modular surge protective device (SPD) unit or module **100** according to some embodiments of the inventive concept is shown therein.

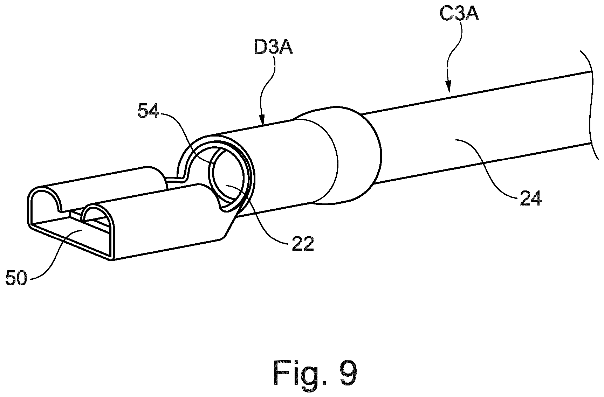

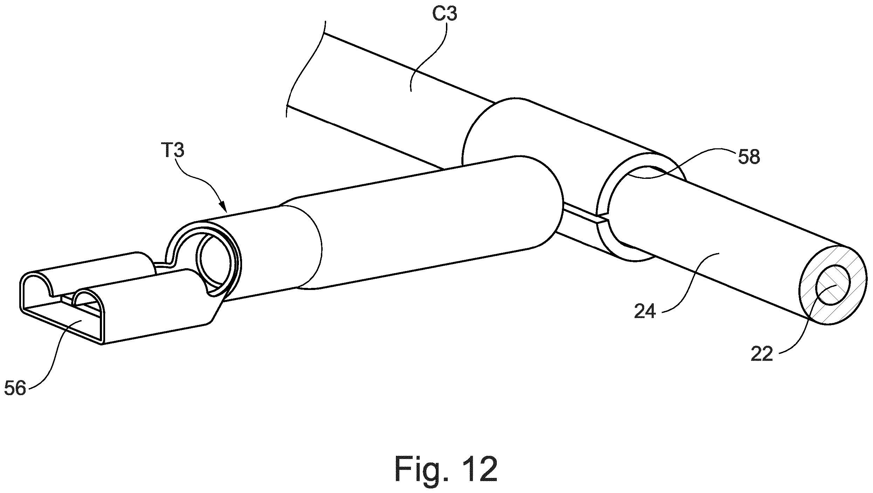

As discussed in more detail below, the SPD module **100** can be used with two alternative connection modes or configurations. In a first connection mode (e.g., as illustrated in **FIGS. 9-11****),** the SPD module **100** is operatively connected to an electrical power supply system using pairs of individual push-on connectors, each pair including an input connector and an output connector. In a second connection mode (e.g., as illustrated in **FIGS. 12-14****),** the SPD module **100** is operatively connected to an electrical power supply system using push-on T-connectors.

The illustrated SPD module **100** is configured to be mounted in each of two alternative mounting modes or configurations. In the first mounting mode, the SPD module **100** is mounted on a support rail **20.** In the second mounting mode, the SPD module **100** is mounted on a flat support surface, such as a wall of a building or cabinet.

The SPD module **100** includes a housing **110,** a terminal cover **130,** an DIN rail latching mechanism **102,** an electrical assembly **141,** three thermal disconnect mechanisms **160,** and an indicator system **171.** The SPD module **100** has a fore-aft or connector receiving axis **A-A** that extends transversely to and, in some embodiments, substantially perpendicular to the lengthwise axis **B-B** of the support or DIN rail **20** when the SPD module **100** is mounted on the support or DIN rail **20.**

The SPD module housing **110** defines an enclosed cavity containing the electrical assembly **141.** The SPD module housing **110** includes a rear housing part **112,** a front housing part **113,** and a carrier **114.** The module housing **110** has a rear end **115R,** a rear section **116R** and a front section **116F.**

A remote connector recess **118** is defined along an edge of the front section **116F.** An indicator window **117** is defined in the front section **116F.** A terminal recess **120** is defined in the front section **116F.** Terminal identifier indicia **122** is provided (e.g., embossed or printed) in the terminal recess **120.**

A support rail receiver slot **124** is defined in the rear section **116R.** Integral wall mount tabs **126** project outwardly from the rear section **116R** and the front section **116F** and include opening **126A** to receive fasteners.

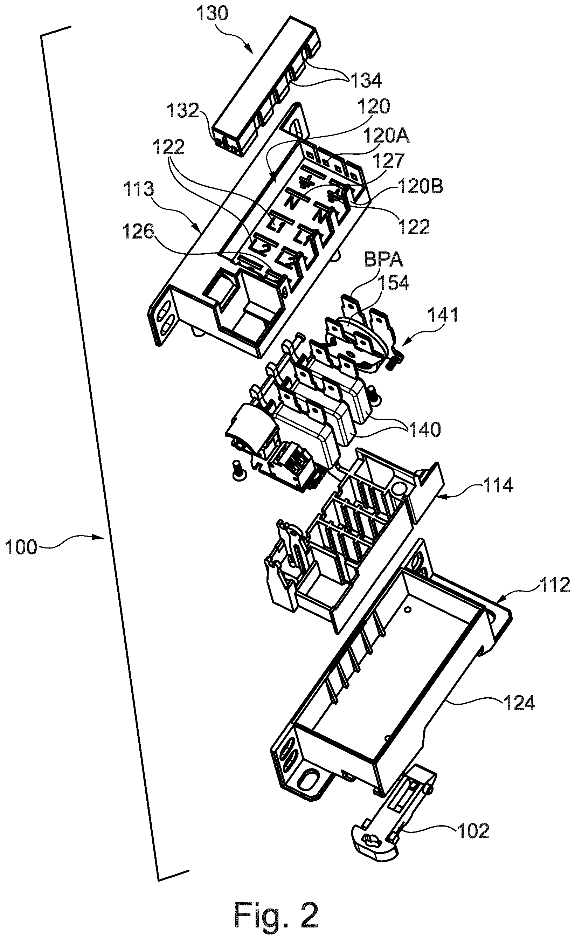

The terminal cover **130** is removably mounted in the terminal recess **120** as shown in **FIG. 1****.** The terminal cover **130** includes latch features **132 (****FIG. 2****)** that interlock with cooperating latch features **120A** on the front section **116F** to releasably secure the terminal cover **130.** The terminal cover **130** includes locator features **134** that mate with cooperating guide features **120B** on the front section **116F** to locate and stabilize the cover **130.**

According to some embodiments, the housing **110** and the terminal cover **130** are formed of an electrically insulating polymeric material. The housing **110** and the terminal cover **130** may be formed of any suitable material or materials. In some embodiments, the housing **110** and the terminal cover **130** are formed of a rigid polymeric material. Suitable polymeric materials may include polyamide (PA), polypropylene (PP), polyphenylene sulfide (PPS), or ABS, for example.

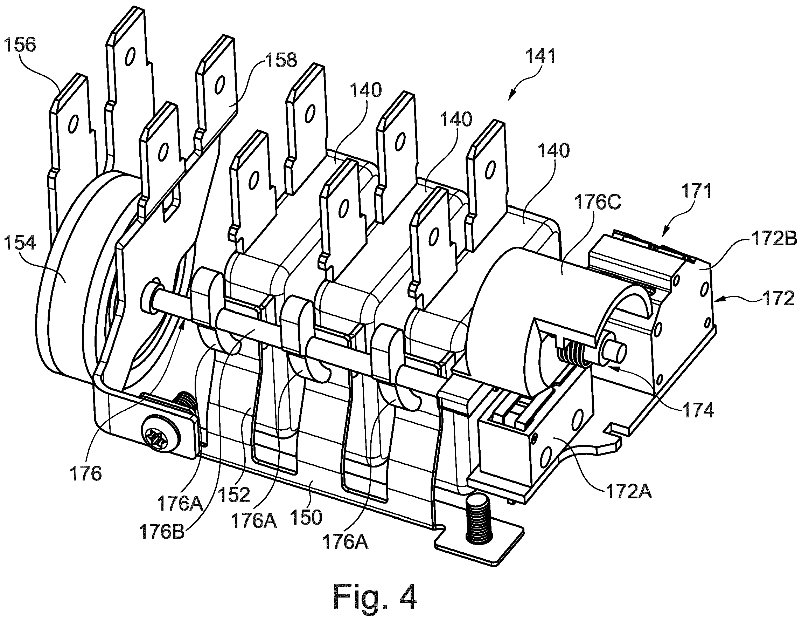

With reference to **FIGS. 4-8****,** the illustrative electrical assembly **141** includes three varistor subassemblies **140** (which serve as overvoltage protection components), a neutral busbar **150,** a gas discharge tube (GDT) **154,** a ground or protective earth (PE) electrode **156,** and a neutral electrode **158.** The SPD module **100** is a multi-pole SPD.

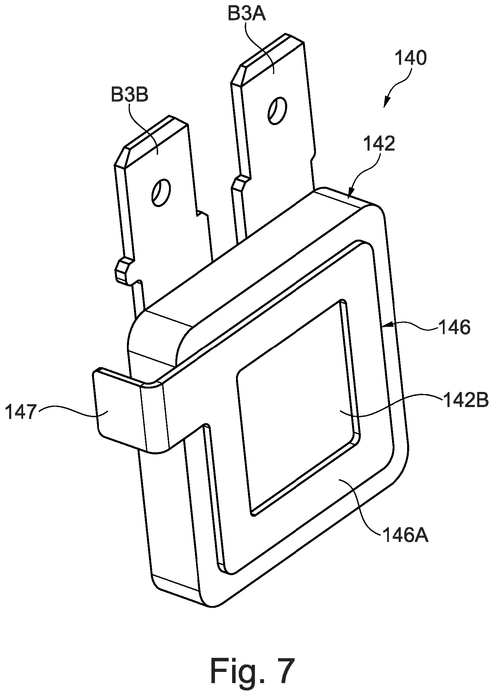

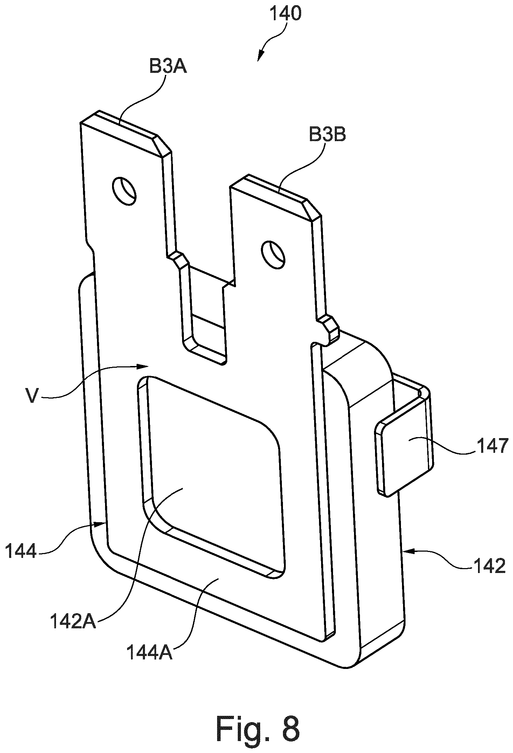

Each varistor subassembly **140** includes an overvoltage protection component **142,** a metal first or line electrode **144,** a metal second or ground electrode **146** and an electrically insulating cover **148** (*e.g.*, epoxy). The cover **148** is not shown in **FIGS. 7** and **8****.** In some embodiments, the overvoltage protection component is an overvoltage clamping element. In some embodiments and as illustrated, the overvoltage clamping element is a varistor **142.**

The varistor **142** has opposed contact surfaces **142A, 142B.** Metallization layers may cover the contact surfaces **142A, 142B.**

The thickness of each of the varistor **142** and the dimensions of its contact surfaces **142A, 142B** will depend on the varistor characteristics desired for the particular application.

The varistor material of the varistor **142** may be any suitable material conventionally used for varistors, namely, a material exhibiting a nonlinear resistance characteristic with applied voltage. In some embodiments, the varistor **142** is a metal oxide varistor (MOV). In some embodiments, the resistance becomes very low when a prescribed voltage is exceeded. The varistor material may be a doped metal oxide or silicon carbide, for example. Suitable metal oxides include zinc oxide compounds.

Each line electrode **144 (****FIG. 8****)** includes a contact portion **144A** and a respective pair of integral line connectors or terminals **B1A** and **B1B**, **B2A** and **B2B,** or **B3A** and **B3B.** Each ground electrode **146** includes a contact portion **146A,** and an integral tab **147.**

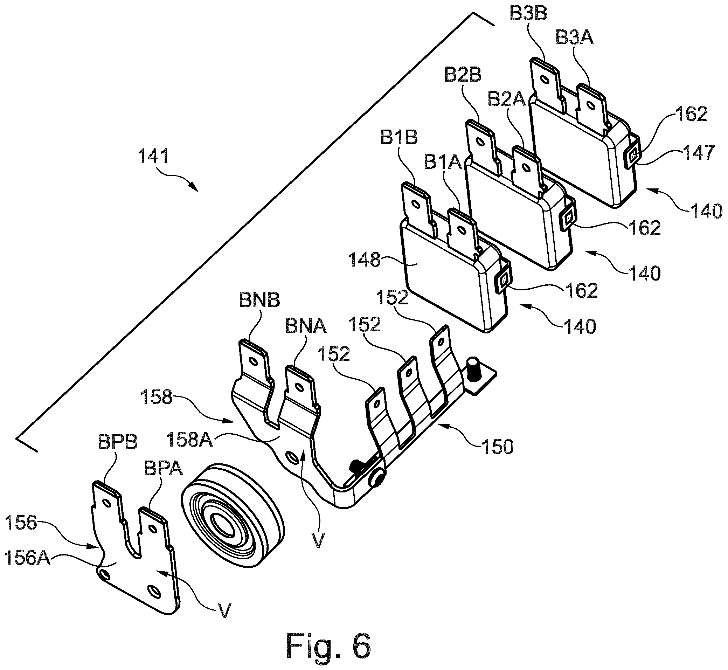

The neutral busbar **150 (****FIG. 6****)** includes three thermal disconnect spring legs **152.** In some embodiments, the thermal disconnect spring legs **152** are elastically deflected spring legs. The neutral busbar **150** is connected to the neutral electrode **158.** The neutral electrode **158** includes a contact portion **158A** and a pair of neutral connectors or terminals **BNA** and **BNB.**

The PE electrode **156** includes a contact portion **156A** and a pair of PE connectors or terminals **BPA** and **BPB.**

The electrodes **144, 146, 156, 158** and the neutral busbar **150** are electrically conductive. In some embodiments, the electrodes **144, 146, 156, 158** and the neutral busbar **150** are formed of metal. Suitable metals may include nickel brass or copper alloys such as CuSn 6 or Cu - ETP. In some embodiments, each of the electrodes **144, 146, 156, 158** and the neutral busbar **150** is unitary (composite or monolithic) and, in some embodiments, monolithic.

The terminals **B1B**, **B2A, B2B, B3A, B3B, BNA, BNB** extend through respective holes **127** in the housing **110** and into the terminal recess **120.** Each terminal is labeled by the indicia **122** adjacent its associated hole **127.**

As will be appreciated from **FIGS. 4-6** and **11,** each terminal **B1A**, **B1B**, **B2A, B2B, B3A, B3B** is connected to the neutral busbar **150** through a varistor **142.** The terminals **B1B**, **B2A, B2B, B3A, B3B, BNA, BNB** are connected in parallel to the PE terminals **BPA, BPB** through the GDT **154.**

The terminals **B1A, B1B** are electrically connected directly to each other and to the contact portion **146A** of their electrode **146.** The terminals **B2A, B2B** are electrically connected directly to each other and to the contact portion **146A** of their electrode **146.** The terminals **B3A, B3B** are electrically connected directly to each other and to the contact portion **146A** of their electrode **146.** The terminals **BNA, BNB** are electrically connected directly to each other and to the contact portion **158A** of the electrode **158.** The terminals **BPA, BPB** are electrically connected directly to each other and to the contact portion **156A** of the electrode **156.**

The terminals **B1A**, **B1B**, **B2A, B2B, B3A, B3B, BNA, BNB, BPA, BPB** each have the form of or include an electrical contact tab or blade configured to be inserted into a cooperating contact socket of a push-on connector. It will be appreciated that each pair of terminals (i.e., **B1A** and **B1B**, **B2A** and **B2B, B3A** and **B3B, BNA** and **BNB, BPA** and **BPB)** forms a respective electrical V-connection **V** and each corresponding electrode **144, 156, 158** forms a V-connector.

Each thermal disconnector mechanism **160** includes one of the disconnect spring legs **152,** a mating one of the tabs **147** and a layer of a meltable bonding agent (e.g., solder) **162.** The solders **162** affix the free end of each disconnect spring leg **152** to its respective tab **147** such that the spring leg **152** is held in an elastically deflected state.

The indicator system **171** includes a remote indicator assembly **172** and a local indicator assembly **174.**

The remote indicator assembly **172** includes an actuator member or swingarm **176,** a switch **172A** and an electrical connector **172B** connected to the switch **172A.** The remote indicator connector **172B** is mounted in the remote connector recess **118** of the SPD module housing **110.** In some embodiments (for example, as illustrated), the remote indicator connector **172B** is accessible from outside the SPD module **100.**

The local indicator assembly **174** includes the actuator member **176.** The actuator member **176** includes three primary legs **176A,** a secondary leg **176B** and an indicator portion **176C.** Each primary leg **176A** is positioned adjacent a respective spring leg **152.**

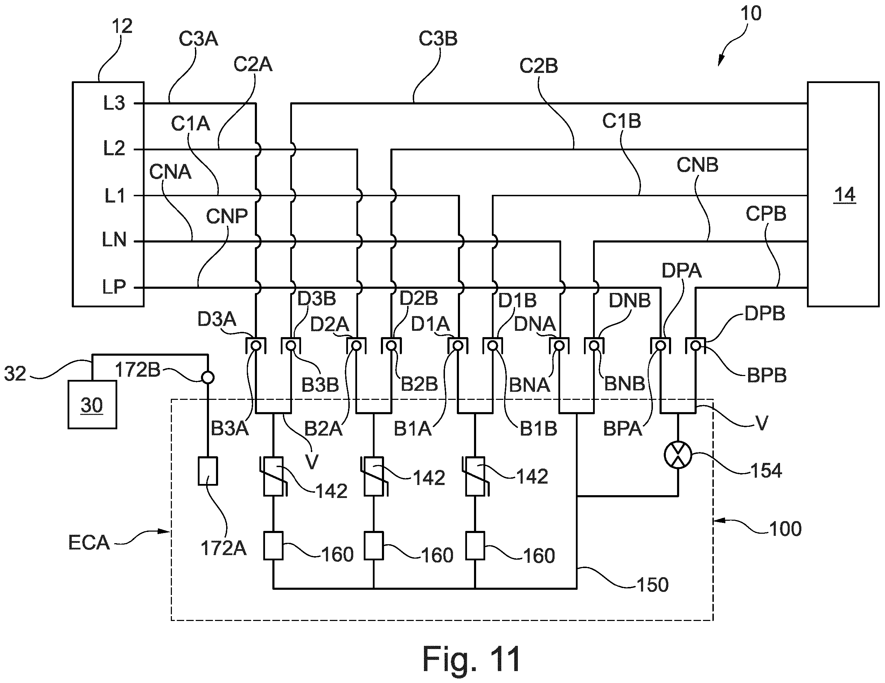

The SPD module **100** embodies an SPD circuit **ECA (****FIG. 11****)** including the terminals **B1A**, **B1B**, **B2A, B2B, B3A, B3B, BNA, BNB, BPA, BPB,** the varistors **142,** the GDT **154,** the thermal disconnectors **160.** The SPD circuit **ECA** as illustrated and described is an example surge protective circuit and other surge protective circuit configurations may be provided instead in accordance with embodiments of the technology.

The SPD module **100** may be used as follows in accordance with some embodiments. The SPD module **100** is configured to be mounted on the DIN rail or wall and to protect a three-phase system using a "3+1" protection configuration. However, other mounting and protection configurations may be provided in accordance with some embodiments of the technology.

With reference to **FIG. 11****,** the SPD module **100** is configured for use in and, in some embodiments forms a part of, an electrical power supply system **10.** The illustrated electrical power supply system **10** according to some embodiments is a three-phase electrical power supply system. The illustrated electrical power supply system **10** includes a power supply **12,** a power load **14** (*e.g.*, equipment), three phase lines **L1, L2, L3** (corresponding to each of the three electrical phases), a neutral line **LN,** a ground or protective earth line **LP.**

As discussed above, the SPD module **100** can be used with two alternative connection modes or configurations and with two alternative mounting modes or configurations. More particularly, the electrical connections between the lines **L1, L2, L3, LN, LP** and the SPD module **100** can be made with pairs of individual push-on connectors or push-on T-connectors. The SPD module **100** can be mounted on a support rail **20** or on a flat support surface, such as a wall of a building or cabinet. Each connection mode may be combined with either mounting mode.

**FIGS. 1** and **9****-11** illustrate the SPD module **100** installed on a support rail **20** and with the lines **L1, L2, L3, LN, LP** electrically and mechanically connected to the SPD module **100** using pairs of individual push-on connectors **D1A** and **D1B, D2A** and **D2B, D3A** and **D3B, DNA** and **DNB, DPA** and **DPB.**

The support rail **20** is received in the slot **124** and the SPD module is secured to the support rail **20** by the latching mechanism **102,** as shown in **FIG. 1****.** According to some embodiments, the support rail **20** is a DIN (Deutsches Institut für Normung e.V.) rail shown in **FIG. 1** and is compliant with corresponding applicable DIN requirements or standards. According to some embodiments, the support rail **20** is a DIN top hat rail having a width of 35 mm and a depth of 7.5 mm. The support or DIN rail **20** has a lengthwise axis **B-B.** The support or DIN rail **20** may be secured (*e.g.*, by screws or other fasteners) to a suitable support structure such as a wall, for example, a rear wall of an electrical service utility cabinet. The SPD module **100** is removably mountable on the support or DIN rail **20.**

In some embodiments, the maximum dimensions of the SPD module 100 are compliant with DIN (Deutsches Institut für Normung e.V.) Standard: DIN EN 60715:2017. In some embodiments, the maximum dimensions of the SPD module **100** are compliant with each of these standards.

The terminal cover **130** is removed from the housing **110** to expose the terminals **B1A**, **B1B**, **B2A, B2B, B3A, B3B, BNA, BNB, BPA, BPB.**

Input cables **C1A, C2A, C3A, CNA,** and **CPA** form parts of lines L1, L2, **L3, LN,** and **LP,** respectively, and are terminated by the push-on connectors **D1A, D2A, D3A, DNA,** and **DPA,** respectively. Output cables **C1B, C2B, C3B, CNB,** and **CPB** form parts of lines **L1, L2, L3, LN,** and **LP,** respectively, and are terminated by the push-on connectors **D1B, D2B, D3B, DNB,** and **DPB** respectively. Each push-on connector includes a terminal socket **50** and a cable conductor electrical contact **54.**

The push-on connectors **D1A, D1B, D2A, D2B, D3A, D3B, DNA, DNB, DPA,** and **DPB** are connected to the terminals **B1A**, **B1B**, **B2A, B2B, B3A, B3B, BNA, BNB, BPA,** and **BPB,** respectively, by inserting each SPD terminal **B1A**, **B1B**, **B2A, B2B, B3A, B3B, BNA, BNB, BPA, BPB** into the contact socket **50** of the corresponding push-on connector **D1A, D1B, D2A, D2B, D3A, D3B, DNA, DNB, DPA, DPB.**

The input cables **C1A, C2A, C3A, CNA,** and **CPA** are thereby electrically connected to the module input terminals **B1A, B2A, B3A, BNA,** and **BPA,** and the output cables **C1B, C2B, C3B, CNB,** and **CPB** are thereby electrically connected to the mated to the module output terminals **B1B**, **B2B, B3B, BNB,** and **BPB.**

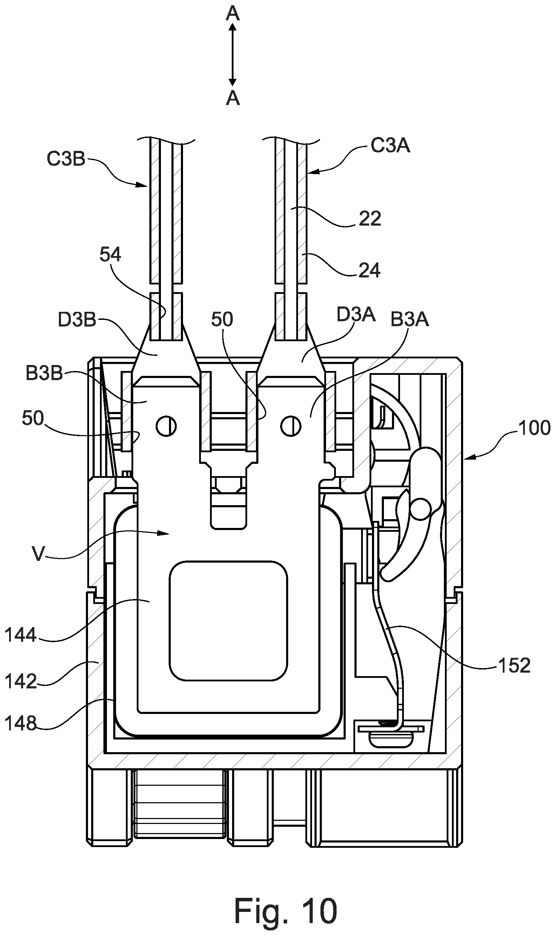

In some embodiments and with reference to **FIGS. 9** and **10****,** the cables **C1A-CPB** are insulated cables including an electrical conductor **22** and a surrounding insulation layer **24.** Each conductor **22** may be electrically and mechanically connected to its corresponding push-on connector **D1A-DPB** in a cable contact socket **54** of the connector.

**FIG. 11** is a schematic view representing the electrical circuit including the SPD module **100** and the cables **C1A, C1B, C2A, C2B, C3A, C3B, CNA, CNB, CPA** and **CPB** connected to the SPD module **100** provide overvoltage protection for equipment connected to the lines **L1, L2, L3, LN,** and **LP.**

It will be appreciated that the cables of each cable pair are electrically connected through the V-connection **V** of their respective electrode **144, 156, 158.** The cables **C1A** and **C1B** are electrically connected to one another through the terminals **B1A** and **B1B**, the cables **C2A** and **C2B** are electrically connected to one another through the terminals **B2A** and **B2B,** the cables **C3A** and **C3B** are electrically connected to one another through the terminals **B3A** and **B3B,** the cables **CNA** and **CNB** are electrically connected to one another through the terminals **BNA** and **BNB,** the cables **CPA** and **CPB** are electrically connected to one another through the terminals **BPA** and **BPB.** In this manner, the lines **L1, L2, L3, LN,** and **LP** are continued across the SPD module **100.** Additionally, each of the lines **L1, L2, L3** is connected to a corresponding varistor **142.**

In some embodiments, the connectors **D1B, D2A, D2B, D3A, D3B, DNA, DNB, DPA, DPB** are fast-on connectors.

**FIGS. 12-14** illustrate the SPD module **100** with the lines **L1, L2, L3, LN, LP** electrically and mechanically connected to the SPD module **100** using push-on T-connectors **T1, T2, T3, TN,** and **TP.**

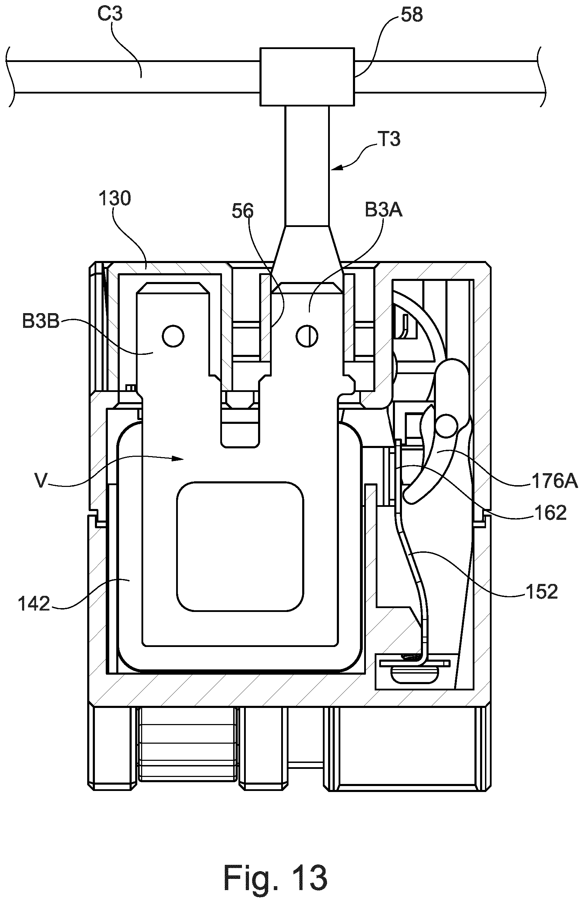

The terminal cover **130** is installed or left in place on the housing **110** as shown in **FIGS. 1** and **13** (i.e., with the cover **130** held securely in place by the interlocking features **132** and **120A).** The module terminals **B1A, B2A, B3A, BNA,** and **BPA** are thereby covered and electrically insulated by the cover **130.**

Cables **C1, C2, C3, CN** and **CP** form parts of lines **L1, L2, L3, LN,** and **LP,** respectively. The T-connectors **T1, T2, T3, TN,** and **TP** electrically contact the conductors **24** of the cables **C1, C2, C3, CN** and **CP,** respectively.

With reference to **FIG. 12****,** each push-on T-connector **T1, T2, T3, TN, TP** includes a terminal socket **56** and a cable conductor electrical contact **58.**

The push-on connectors **T1, T2, T3, TN, TP are** connected to the module input terminals **B1A, B2A, B3A, BNA,** and **BPA** by inserting the module terminals **B1A, B2A, B3A, BNA,** and **BPA** into the corresponding terminal sockets **56.**

In some embodiments, the conductor **22** of each cable **C1, C2, C3, CN, CP** extends continuously to and from its T-connector and the T-connector electrically taps the continuous conductor **22** with its cable contact **58.** For example, the T-connector may be an insulation piercing connector (IPC). In other embodiments, the cables **C1, C2, C3, CN, CP** may each comprise an input cable that feeds into the T-connector and an output cable that extends from the T-connector with the conductors of the input and output cables electrically connected to the T-connector.

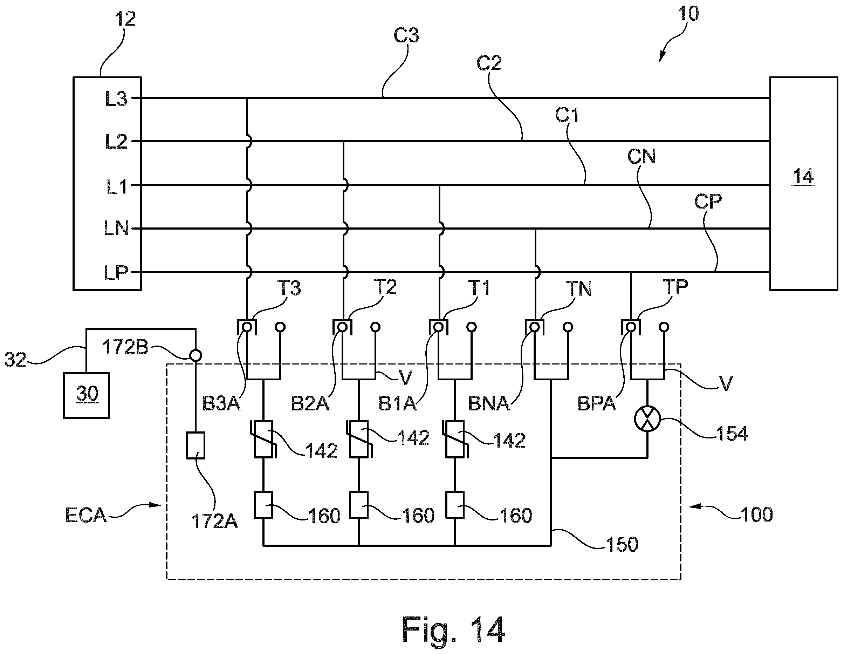

FIG. 14 is a schematic view representing the electrical circuit including the SPD module 100 and the cables **C1, C2, C3, CN, CP** connected to the SPD module **100** provide overvoltage protection for equipment connected to the lines **L1, L2, L3, LN,** and **LP.**

In some embodiments, the connectors **T1**, **T2, T3, TN,** and **TP** are fast-on connectors.

The SPD system **101** may further include a remote monitoring device **30 (****FIG. 11****).** The remote monitoring device **30** can be electrically connected to the SPD module **100** to monitor a state of the SPD module **100.** The SPD module **100** and the remote monitoring device **30** together form a remote monitoring system. The monitoring line **32** is connected to the SPD module **100** via the remote monitoring connector **172B.** The monitoring line **32** connects the SPD module **100** to the remote monitoring device **30.**

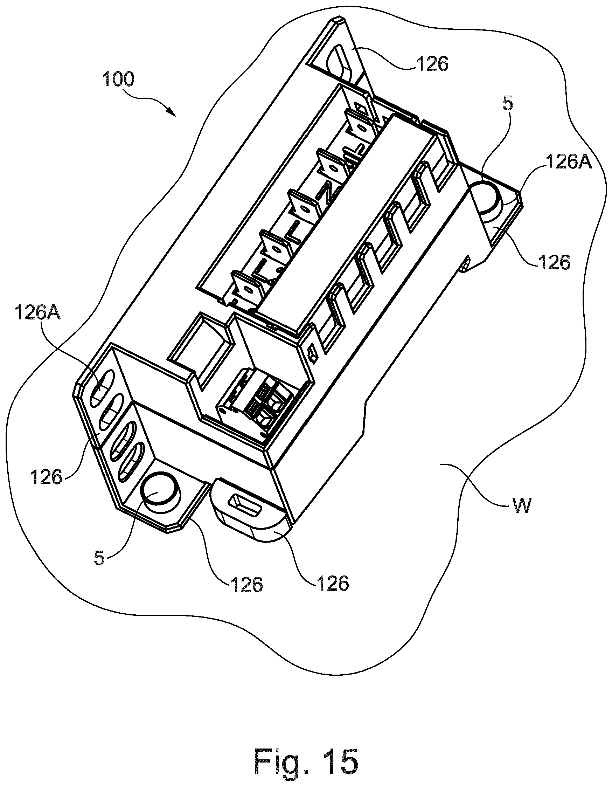

As discussed herein, the SPD module **100** can alternatively be mounted directly on a wall surface without using a support rail. **FIG.** 15 illustrates the SPD module **100** secured to a wall **W** using fasteners **5** inserted through the openings **126A** of the mounting tabs **126.** Although only the mounting tabs **126** on the rear of the module **100** are used to mount the module **100** in the illustrated example, in other embodiments the other mounting tabs **126** may be used or any combination of the rear tabs **126** and side tabs **126** may be used.

In each connection configuration **(****FIGS. 10** and **13****),** the installed SPD module **100** is in electrical parallel with the equipment to be protected between the power supply **12** and the power load or equipment **14.** The SPD module **100** is operative to divert surge current to ground.

The lines **L1, L2, L3, LN, LP** are provided with surge protection by the SPD module **100.** The varistors **142** along with the GDT **154** together form a three-phase surge protective or overvoltage protection circuit **ECA.** However, other configurations of protective circuits may be provided in other embodiments (e.g., 3+0, 4+0, 1+0, 1+0, 2+0, 1+1, etc. according to IEC 61643-11:2011 and IEC 61643-12:2020). While the varistors **142** are provided as the overvoltage protection components of the SPD module **100,** in other embodiments overvoltage protection components other than varistors may be used. Such other overvoltage protection components may include spark gaps, diodes, thyristors, etc.

In use, each thermal disconnect mechanism **160** serves as a fail-safe mechanism that is actuated in response to heat generated in the SPD module **100.** In some embodiments, actuation of the thermal disconnect mechanism **160** will in turn actuate the indicator system **171** to alert an operator that the thermal disconnect mechanism **160** has been triggered.

As is well known, a varistor has an innate nominal clamping voltage VNOM (sometimes referred to as the "breakdown voltage" or simply the "varistor voltage") at which the varistor begins to conduct current. Below the VNOM, an ideal varistor will not pass current, but in practice may pass a leakage current. Above the VNOM, the varistor will conduct a current (*i.e*., a leakage current or a surge current). The VNOM of a varistor is typically specified as the measured voltage across the varistor with a DC current of 1mA.

As is known, a varistor has three modes of operation. In a first normal mode (discussed above), up to a nominal voltage, the varistor is practically an electrical insulator. In a second normal mode (also discussed above), when the varistor is subjected to an overvoltage, the varistor temporarily and reversibly becomes an electrical conductor during the overvoltage condition and returns to the first mode thereafter. In a third mode (the so-called end of life mode), the varistor is effectively depleted and becomes a permanent, non-reversible electrical conductor.

The varistor also has an innate clamping voltage VC (sometimes referred to as simply the "clamping voltage"). The clamping voltage VC is defined as the maximum voltage measured across the varistor when a specified current is applied to the varistor over time according to a standard protocol.

In the absence of an overvoltage condition, each varistor **142** provides high resistance such that no current flows through the varistor **142** as it appears electrically as an open circuit. That is, ordinarily the varistor **142** passes no current. The electrodes **144, 146** are electrically isolated from one another by the varistor **142.** In the event of an overcurrent surge event (typically transient; *e.g*., lightning strike) or an overvoltage condition or event (typically longer in duration than an overcurrent surge event) exceeding VNOM, the resistance of the varistor **142** decreases rapidly, allowing current to flow through the varistor **142** and create a shunt path for current flow to ground via the neutral busbar **150** and the module terminals **BPA, BPB.** Normally, the varistors **142** recover from these events without significant overheating of the varistor.

The VNOM of a given varistor begins at a certain value and over time could degrade to a lower effective VNOM value as a result of varistor aging. Typically, a varistor is initially rated for a "maximum continuous operating voltage" (MCOV), indicating that the VNOM of the varistor exceeds the rated MCOV when first placed in service.

Varistor aging (*i.e*, degradation resulting in reduction of the VNOM) can be caused by surge currents (during overvoltage events) or continuous leakage currents (during normal operation of the power system) applied to the varistor in service, as well as by passage of time with the nominal voltage applied on the varistor (rare case, typically caused by low quality varistors). Aging degradation is generally thermally induced.

As a result, in an end of life condition, a fault current will continuously flow through the varistor **142** even in the absence of an overvoltage condition. In this case, the current may continue to flow through the varistor **142,** thereby generating heat from ohmic losses in the varistor **142.** If the condition was permitted to persist, excess heat may be generated in the varistor **142.**

Varistors have multiple failure modes. The failure modes include: 1) the varistor fails as a short circuit; and 2) the varistor fails as a linear resistance. The failure of the varistor to a short circuit or to a linear resistance may be caused by the conduction of a single or multiple surge currents of sufficient magnitude and duration or by a single or multiple continuous overvoltage events that will drive a sufficient current through the varistor.

A short circuit failure typically manifests as a localized pinhole or puncture site (herein, "the failure site") extending through the thickness of the varistor. This failure site creates a path for current flow between the two electrodes of a low resistance, but high enough to generate ohmic losses and cause overheating of the device even at low fault currents. Sufficiently large fault current through the varistor can melt the varistor in the region of the failure site and generate an electric arc.

A varistor failure as a linear resistance will cause the conduction of a limited current through the varistor that will result in a buildup of heat. This heat buildup may result in catastrophic thermal runaway and the device temperature may exceed a prescribed maximum temperature. For example, the maximum allowable temperature for the exterior surfaces of the device may be set by code or standard to prevent combustion of adjacent components. If the leakage current is not interrupted at a certain period of time, the overheating will result eventually in the failure of the varistor to a short circuit as defined above.

In some cases, the current through the failed varistor could also be limited by the power system itself (*e.g.*, ground resistance in the system or in photo-voltaic (PV) power source applications where the fault current depends on the power generation capability of the system at the time of the failure) resulting in a progressive build up of temperature, even if the varistor failure is a short circuit. There are cases where there is a limited leakage current flow through the varistor due to extended in time overvoltage conditions due to power system failures, for example. These conditions may lead to temperature build up in the device, such as when the varistor has failed as a linear resistance and could possibly lead to the failure of the varistor either as a linear resistance or as a short circuit as described above.

In some cases, the varistor **142** may assume an "end of life" mode in which the varistor **142** is depleted in full or in part (*i.e*, in an "end of life" state), leading to an end of life failure. When the varistor **142** reaches its end of life, the varistor **142** will become substantially a short circuit with a very low but non-zero ohmic resistance.

As a result, in an end of life condition, a fault current will continuously flow through the varistor **142** even in the absence of an overvoltage condition. In this case, the current may continue to flow through the varistor **142** , thereby generating heat from ohmic losses in the varistor **142 .** If the condition was permitted to persist, the heat generated in the varistor **142** and the SPD module **100** could build up until the SPD module **100** or part thereof melts or explodes. Such an event may be regarded as catastrophic. If the fault current were of sufficient magnitude, the fault current may induce or generate electric arcing through and around the varistor **142** (herein, an "arcing event"). Such an arcing event may rapidly generate additional heat in the SPD module **100.** Such an arcing event may rapidly generate additional heat in the SPD module **100** and/or may cause localized damage to other components of or adjacent the SPD module **100.**

In the case of the SPD module **100,** each thermal disconnect mechanism **160** is adapted and configured to electrically disconnect the corresponding varistor **142** from the ground line **LP** (and thereby from the power load) to prevent or reduce the generation of heat in the varistor. In this way, the thermal disconnect mechanism **160** can operate as a switch to prevent overheating and catastrophic failure as described above.

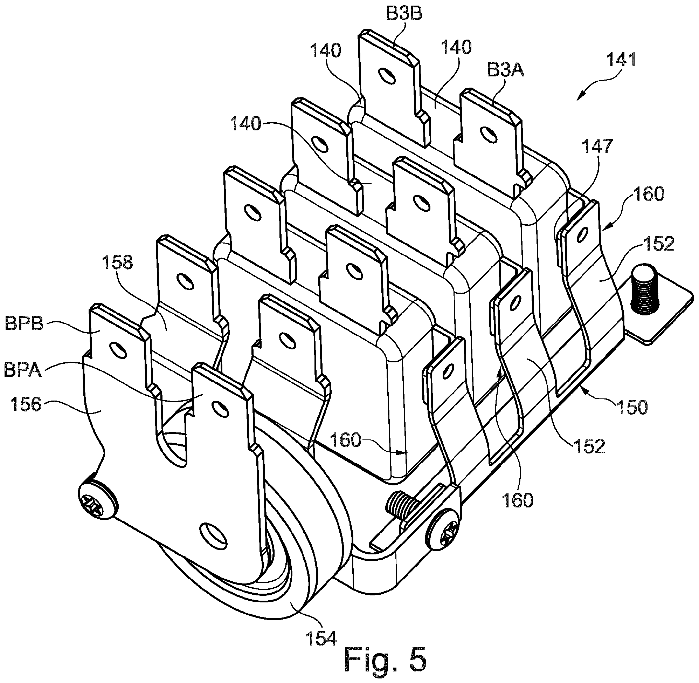

More particularly, during normal operation, the thermal disconnector mechanism **160** remains in a ready position **(****FIGS. 5** and **10****)** with the spring leg **152** bonded to and in electrical continuity with the tab **147** by the solder **162.** In this normal mode, each varistor **142** is an insulator up to the nominal clamping voltage VNOM. In the case of a surge event and when the varistors **142** is not in an end of life state, the heat generated in the varistor **142** is not sufficient to melt the solder **162.** However, when a varistor fails (as described above) or assumes an end of life state, overheating of one of the varistors **142** will sufficiently heat its solder **162** to cause its solder **162** to melt and release the elastically deflected leg **152** from its tab **147.** The corresponding varistor **142** is thereby disconnected from the ground terminals **BPA, BPB.** In some embodiments, the remaining legs **152** will remain affixed to their tabs **147** by the solders **162** so that the associated lines continue to be overvoltage protected by their associated varistors **142.**

In some embodiments, the actuation of any of the thermal disconnect mechanisms **160** also actuates the remote indicator mechanism **172** and the local indicator mechanism **176C** to signal to an observer that a varistor **142** has failed. In some embodiments, the actuation of any one of the thermal disconnect mechanisms **160** actuates both the remote indicator mechanism **172** and the local indicator mechanism **176C.**

Upon actuation of a thermal disconnect mechanism **160,** the released leg **152** will forcibly displace the legs **176A** from the ready position **(****FIG. 5****).** This in turn displaces the indicator **176C** into a location visible through the indicator window **117.** This provides a visual alert or indication on the SPD module **100** so that an operator can readily determine that the SPD module **100** has assumed a failed state.

The displacement of the leg **176A** will also actuate or change the state of the remote signaling switch **172A.** The change of state of the switch **172A** is transmitted to the remote monitoring device **30** via the remote signal connector **172B.**

SPD modules as disclosed herein (e.g., the SPD module **100)** can provide a number of advantages. The SPD module **100** provides fast-on terminals configured as V-connectors that can be used in a single point connection configuration (e.g., for connections made with a push-on T-connector) and, alternatively in a dual point, through wire connection configuration (e.g., for connections made with an input cable and an output cable each provided with a push-on connector). A removable, electrical insulating cover is provided to cover and shield the unused module terminals when the single point connection configuration is used. In some embodiments, the module terminals are configured to connect with fast-on connectors.

The SPD module **100** is configured to be flexibly mounted on a support rail or, alternatively, directly on a wall.

The individual thermal disconnector mechanisms associated with each varistor share an electrode or busbar on the neutral side of the varistors. This can enable shorter response times and a more compact SPD module form factor.

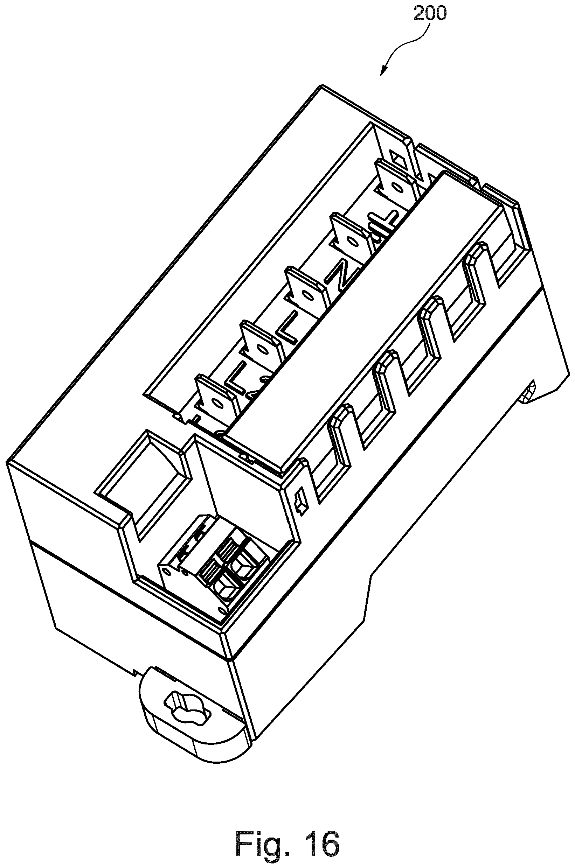

**FIG. 16** shows an SPD module according to alternative embodiments. The SPD module **200** differs from the SPD module **100** only in that the wall mounting tabs **126** are omitted.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Like reference numbers signify like elements throughout the description of the figures.

It will be understood that, although the terms "first," "second," etc. may be used herein to describe various elements, these elements should not be limited by these terms. These terms are only used to distinguish one element from another. Thus, a first element could be termed a second element without departing from the teachings of the inventive subject matter.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and this specification and will not be interpreted in an idealized or overly formal sense unless expressly so defined herein.

Many alterations and modifications may be made by those having ordinary skill in the art, given the benefit of present disclosure, without departing from the spirit and scope of the invention. Therefore, it must be understood that the illustrated embodiments have been set forth only for the purposes of example, and that it should not be taken as limiting the invention as defined by the following claims. The following claims, therefore, are to be read to include not only the combination of elements which are literally set forth but all equivalent elements for performing substantially the same function in substantially the same way to obtain substantially the same result. The claims are thus to be understood to include what is specifically illustrated and described above, what is conceptually equivalent, and also what incorporates the essential idea of the invention.

## Claims

1. A surge protective device (SPD) module for use with an electrical power supply transmission system, the SPD module comprising:
a module housing;
an SPD circuit in the module housing and including an overvoltage protection component; and
module terminals on the module housing, the module terminals being configured to electrically connect cables from the electrical power supply transmission system to the SPD circuit;
wherein:
the module terminals are push-on connectors; and
the module terminals are configured in pairs of first and second module terminals, wherein the first and second module terminals of each pair form an electrical V-connection with one another.

2. The SPD module of Claim 1 including an electrically insulating terminal cover removably mounted on the module housing and covering the second module terminals.

3. The SPD module of any one of Claims 1 and 2 wherein the module terminals are fast-on connectors.

4. The SPD module of any one of Claims 1 to 3 wherein the overvoltage protection component includes a varistor.

5. The SPD module of Claim 4 wherein the SPD module includes a thermal disconnect mechanism configured to disconnect the varistor in response to overheating of the varistor.

6. The SPD module of any one of Claim 5 wherein the SPD module includes an indicator system configured to provide an alert in response to actuation of the thermal disconnect mechanism.

7. The SPD module of Claim 6 wherein the indicator system includes a remote indicator system including:
a switch; and
a remote monitoring connector forming a part of the SPD module.

8. The SPD module of Claim 4 including:
a first varistor connected to a first pair of the module terminals;
a second varistor connected to second pair of the module terminals;
a neutral busbar connected to a third pair of the module terminals;
a first thermal disconnect mechanism configured to disconnect the first varistor in response to overheating of the first varistor; and
a second thermal disconnect mechanism configured to disconnect the second varistor in response to overheating of the second varistor;
wherein:
the first thermal disconnect mechanism includes a first disconnect leg forming a part of the neutral busbar; and
the second thermal disconnect mechanism includes a second disconnect leg forming a part of the neutral busbar.

9. The SPD module of any one of Claim 8 wherein the SPD module includes an indicator system configured to provide an alert in response to actuation of either of the first and second thermal disconnect mechanisms.

10. The SPD module of any one of Claims 1 to 9 wherein the SPD module is configured to be mounted on a support rail.

11. The SPD module of Claim 10 including:
a support rail channel configured to receive the support rail; and
a support rail latching mechanism configured secure the SPD module to the support rail.

12. The SPD module of any one of Claims 10 and 11 wherein the SPD module is also configured to be alternatively mounted directly on a wall.
